# EUROPÄISCHE PATENTSCHRIFT

(11) **EP 3 992 004 B1**
(45) Veröffentlichungstag und Bekanntmachung des Hinweises auf die Patenterteilung: **14.08.2024**
(21) Anmeldenummer: 20306312.8
(22) Anmeldetag: 02.11.2020
(51) Int. Cl.: B60J 3/02, F16B 19/10

(54) **BEFESTIGUNGSANORDNUNG ZUM VORBEFESTIGEN EINER FAHRZEUGKOMPONENTE AN EINEM FAHRZEUGVERKLEIDUNGSTEIL SOWIE VORBEFESTIGTES SYSTEM ZUM BEFESTIGEN AN EINER FAHRZEUGSTRUKTUR**
FASTENING ARRANGEMENT FOR PREFIXING A VEHICLE COMPONENT TO A VEHICLE PANEL AND A PREMOUNTED SYSTEM FOR FIXING TO A VEHICLE STRUCTURE
DISPOSITIF DE FIXATION PERMETTANT DE PRÉFIXER UN COMPOSANT DE VÉHICULE À UNE PARTIE D'HABILLAGE DE VÉHICULE AINSI QUE SYSTÈME PRÉFIXÉ DESTINÉ À LA FIXATION À UNE STRUCTURE DE VÉHICULE

(43) Veröffentlichungstag der Anmeldung: 04.05.2022
(73) Patentinhaber: Daimay France SAS, 57150 Creutzwald (FR)
(72) Erfinder: WELTER, Patrick, 57730 LACHAMBRE (FR)
(74) Vertreter: Meissner Bolte Partnerschaft mbB

(56) Entgegenhaltungen:
- EP-A2- 1 110 778
- EP-B1- 1 110 778
- DE-T2- 69 506 328
- US-A- 5 560 575

## Beschreibung

Die vorliegende Erfindung betrifft eine Befestigungsanordnung zum Vorbefestigen einer Fahrzeugkomponente, insbesondere einer Fahrzeuginnenkomponente, an einem Fahrzeugverkleidungsteil, insbesondere einem Fahrzeuginnenverkleidungsteil, sowie ein System aus einem Fahrzeugverkleidungsteil, insbesondere einem Fahrzeuginnenverkleidungsteil, und einer mittels einer solchen Befestigungsanordnung vorbefestigten Fahrzeugkomponente, insbesondere einer Fahrzeuginnenkomponente, zum Befestigen an einer Fahrzeugstruktur, insbesondere einem Fahrzeugkarosserieteil.

Zum Befestigen von Fahrzeugkomponenten, insbesondere Fahrzeuginnenkomponenten, wie beispielsweise Fahrzeugsonnenblenden, Fahrzeughaltegriffen, Fahrzeuglichtmodulen oder Fahrzeugdachkonsolen, an einem Fahrzeugverkleidungsteil, insbesondere einem Fahrzeuginnenverkleidungsteil, wie beispielsweise einem Dachhimmel, und/oder an einer Fahrzeugstruktur, insbesondere einem Fahrzeugkarosserieteil, werden sogenannte Befestigungselemente verwendet, die es ermöglichen die Fahrzeugkomponente fest an dem Fahrzeugverkleidungsteil und/oder der Fahrzeugstruktur zu befestigen, wobei die Fahrzeugkomponente zwischen verschiedenen Positionen schwenkbar bzw. verlagerbar bleibt. Derartige Befestigungselemente werden herkömmlicherweise auch als Gegenlagerbock oder Gegenlagerböckchen bezeichnet, wobei die Fahrzeugkomponente zum Verschwenken in dem Gegenlagerbock oder den Gegenlagerböckchen schwenkbar bzw. verlagerbar aufgenommen bzw. gelagert ist.

Um derartige Befestigungselemente an einem Fahrzeugverkleidungsteil und/oder einer Fahrzeugstruktur zu befestigen, werden diese herkömmlicherweise unmittelbar mit dem Fahrzeugverkleidungsteil und/oder der Fahrzeugstruktur verschraubt, so dass sich die Befestigungselemente nicht mehr relativ hierzu bewegen können bzw. vor Bewegungen in sämtlichen Axialrichtungen relativ zum Fahrzeugverkleidungsteil und/oder zur Fahrzeugstruktur gesichert sind. Alternativ zu dieser Befestigungsart können die Befestigungselemente in Öffnungen des Fahrzeugverkleidungsteils und/oder der Fahrzeugstruktur von einer Seite bzw. Richtung aus zumindest bereichsweise eingesetzt werden und anschließend von einer anderen rückwärtigen Seite bzw. Richtung aus mit dem Fahrzeugverkleidungsteil und/oder der Fahrzeugstruktur befestigt werden, gegebenenfalls unter Verwendung zusätzlicher Elemente.

Oftmals besteht zudem der Bedarf, eine Anordnung bzw. ein System aus der Fahrzeugkomponente, dem Befestigungselement und dem Fahrzeugverkleidungsteil vorzufertigen, die bzw. das in einem anschließenden weiteren (End-)montageschritt mit der Fahrzeugstruktur verbunden bzw. an dieser befestigt wird. Auch bei derartigen vorbefestigten Anordnungen bzw. Systemen erfolgt die Vorbefestigung und die Endbefestigung an der Fahrzeugstruktur entweder mittels einer Verschraubung oder aber mittels des zuvor beschriebenen Montagevorgangs von zwei Seiten bzw. aus zwei Richtungen.

Insbesondere im Hinblick auf die vorgefertigte Anordnung bzw. das vorgefertigte System besteht jedoch der Nachteil, dass das Befestigungselement nach der Befestigung an dem Fahrzeugverkleidungsteil nicht mehr ausgerichtet bzw. feinjustiert werden kann, um etwaige Toleranzen bei der (End-)montage bzw. - befestigung an der Fahrzeugstruktur auszugleichen.

Zudem sind beide Befestigungs- bzw. Montagevarianten grundsätzlich sehr zeitaufwendig, fehleranfällig und benötigen unter Umständen zusätzliche Elemente, was erhebliche Kosten bei der Fertigung generiert. Insbesondere bei dem zweiseitigen Montagevorgang muss außerdem stets eine gute Zugänglichkeit zur rückwärtigen Seite des Fahrzeugverkleidungsteils und/oder der Fahrzeugstruktur gegeben sein, so dass ein Monteur überhaupt die Befestigung des Befestigungselements an diesen Bauteilen vornehmen kann.

Aus der EP 0 713 793 A1 ist beispielsweise ein derartiges Befestigungselement, insbesondere ein Gegenlagerböckchen für Fahrzeugsonnenblenden, bekannt, das mittels einer Verschraubung an einer Fahrzeugstruktur gesichert wird.

Die Druckschrift EP 1 110 778 A2 betrifft eine Vorrichtung zum Haltern einer Sonnenblende in einem Fahrzeug mit einer Dachbeplankung und einem die Dachbeplankung bedeckendem Dachhimmel. Die Vorrichtung umfasst einen Halter mit einem Körperabschnitt zur Aufnahme eines Teils der Sonnenblende. Wenigstens zwei Schenkel erstrecken sich von dem Körperabschnitt durch eine erste, sich durch den Dachhimmel erstreckende Öffnung und durch eine zweite, sich durch die Dachbeplankung erstreckende Öffnung. Ein Stift ist von einer ersten Position in eine zweite Position bewegbar. Zum Verbinden des Halters mit der Dachbeplankung drückt der Stift die wenigstens zwei Schenkel in Richtung der Ränder der zweiten Öffnung, wenn sich der Stift in der zweiten Position befindet.

Aufgabe der Erfindung ist es, eine mehrteilige Befestigungsanordnung zum Vorbefestigen einer Fahrzeugkomponente an einem Fahrzeugverkleidungsteil anzugeben, die blind von einer Seite bzw. Richtung aus an dem Fahrzeugverkleidungsteil montiert bzw. mit diesem befestigt werden kann, ohne, dass komplizierte und arbeitsintensive Montageschritte, insbesondere ein Montageschritt von einer rückwärtigen Seite bzw. Richtung des Fahrzeugverkleidungsteils aus, erfolgen müssen, und ohne, dass zusätzliche Elemente, wie beispielsweise Schrauben und dergleichen, benötigt werden. Des Weiteren soll ein vorbefestigtes System angegeben werden, welches entsprechend ebenfalls blind von einer Seite bzw. Richtung aus an eine Fahrzeugstruktur montierbar bzw. mit dieser befestigbar ist.

Im Hinblick auf die Befestigungsanordnung wird die der Erfindung zugrundeliegende Aufgabe durch den Gegenstand des unabhängigen Patentanspruchs 1 gelöst, wobei vorteilhafte Weiterbildungen der erfindungsgemäßen Befestigungsanordnung in den entsprechenden abhängigen Patentansprüchen 2 bis 9 angegeben sind. Im Hinblick auf das System wird die der Erfindung zugrundeliegende Aufgabe durch den Gegenstand des unabhängigen Patentanspruchs 10 gelöst, wobei vorteilhafte Weiterbildungen des erfindungsgemäßen Systems in den entsprechenden abhängigen Patentansprüchen 11 bis 13 angegeben sind.

Demgemäß betrifft die Erfindung insbesondere eine Befestigungsanordnung zum Vorbefestigen einer Fahrzeugkomponente, insbesondere einer Fahrzeuginnenkomponente, an einem Fahrzeugverkleidungsteil, insbesondere einem Fahrzeuginnenverkleidungsteil, wobei die Befestigungsanordnung eine Klemmeinrichtung mit einem Spreizelement und einem Anlageelement aufweist, Das Spreizelement ist ausgebildet, einen ersten Zustand einzunehmen, in welchem das Spreizelement in eine Öffnung des Fahrzeugverkleidungsteils einführbar ist, und einen zweiten Zustand einzunehmen, in welchem ein Randbereich des Fahrzeugverkleidungsteils, der die Öffnung des Fahrzeugverkleidungsteils umgibt, zwischen dem Spreizelement und dem Anlageelement aufgenommen, insbesondere verklemmt, ist. Die Befestigungsanordnung weist ferner einen Manipulator auf, der ausgebildet ist, mit dem Spreizelement derart zusammenzuwirken, dass das Spreizelement nachdem es in die Öffnung des Fahrzeugverkleidungsteils eingeführt ist von dem ersten Zustand in den zweiten Zustand überführt ist.

Durch die erfindungsgemäße Lösung ist es möglich, die Befestigungsanordnung auf sehr unkomplizierte, wirtschaftliche und fehlerfreie Art und Weise blind von einer Seite bzw. Richtung aus an bzw. mit einem Fahrzeugverkleidungsteil zu befestigen. Hierbei müssen keine zusätzlichen Elemente oder Befestigungsmittel, wie beispielsweise Schrauben und dergleichen, verwendet werden, geschweige denn aufwändige und fehlerbehaftete Montageschritte von einem Monteur vorgenommen werden. Die Befestigungsanordnung kann vielmehr lediglich in die Öffnung des Fahrzeugverkleidungsteils eingeführt werden und dabei während des Einführvorgangs durch Zusammenwirken ihrer Komponenten mit dem Fahrzeugverkleidungsteil befestigt werden, um somit eine Fahrzeugkomponente an dem Fahrzeugverkleidungsteil vorzubefestigen, wobei eine gewisse Positionierbarkeit der Befestigungsanordnung relativ zum Fahrzeugverkleidungsteil im vorbefestigten Zustand erhalten bleibt.

Bei der erfindungsgemäßen Befestigungsanordnung ist vorgesehen, dass der Manipulator relativ zu dem Spreizelement und dem Anlageelement bewegbar ist, wobei bei einem Bewegen des Manipulators in eine erste Richtung relativ zu dem Spreizelement und zu dem Anlageelement der Manipulator das Spreizelement von dem ersten Zustand in den zweiten Zustand überführt.

Mit anderen Worten, eine einfache Relativbewegung zwischen Manipulator und Klemmeinrichtung bei einem Einführvorgang der Befestigungsanordnung in die Öffnung des Fahrzeugverkleidungsteils sorgt dafür, dass die Befestigungsanordnung in der Öffnung des Fahrzeugverkleidungsteils befestigt bzw. der Randbereich des Fahrzeugverkleidungsteils zwischen dem Spreizelement und dem Anlageelement der Klemmeinrichtung aufgenommen, insbesondere verklemmt, wird.

Insbesondere ist vorgesehen, dass der Manipulator mindestens eine Gleitstruktur, insbesondere mindestens eine Gleitwandung, aufweist, die mit dem Spreizelement beim Bewegen des Manipulators in die erste Richtung relativ zu dem Spreizelement und zu dem Anlageelement derart zusammenwirkt, dass das Spreizelement von dem ersten Zustand in den zweiten Zustand überführt wird.

Diese Ausgestaltung des Manipulators erlaubt es, mittels der axialen Relativbewegung zwischen Manipulator und Klemmeinrichtung in Einführrichtung der Befestigungsanordnung beim Einführvorgang in die Öffnung des Fahrzeugverkleidungsteils ein zumindest im Wesentlichen quer zur Einführrichtung ablaufendes Spreizen des Spreizelements zu induzieren, wodurch der Randbereich des Fahrzeugverkleidungsteils zwischen dem Spreizelement und dem Anlageelement verklemmt wird.

Gemäß einer vorteilhaften Weiterbildung der erfindungsgemäßen Befestigungsanordnung ist vorgesehen, dass das Spreizelement federnd spreizbar ausgebildet ist, wobei in dem vorbefestigten Zustand der Befestigungsanordnung an dem Fahrzeugverkleidungsteil bei einem Bewegen des Manipulators in eine zweite Richtung, die entgegengesetzt zu der ersten Richtung ist, das Spreizelement von dem zweiten Zustand zurück in den ersten Zustand überführt wird.

Hierdurch ist es möglich, die an dem Fahrzeugverkleidungsteil vorbefestigte Befestigungsanordnung besonders einfach wieder von dem Fahrzeugverkleidungsteil zu demontieren, beispielsweise in einem Fall, in dem die Befestigungsanordnung beschädigt ist und ersetzt werden muss. Eine simple Bewegung des Manipulators entgegengesetzt zur Einführrichtung sorgt für eine reversible Verformungsbewegung des Spreizelements, die die Befestigungsanordnung freigibt.

Gemäß einer vorteilhaften Weiterbildung der erfindungsgemäßen Befestigungsanordnung ist vorgesehen, dass die Befestigungsanordnung in den Vormontagezustand bringbar ist, wobei der Manipulator in dem Vormontagezustand der Befestigungsanordnung ausgebildet ist, an der Klemmeinrichtung befestigt zu werden, insbesondere mit dieser zu verrasten, und zwar derart, dass der Manipulator vor einem ungewollten Lösen in eine zweite Richtung, die entgegengesetzt zu der ersten Richtung ist, gesichert ist.

Insbesondere ist vorgesehen, dass der Manipulator ein Rastelement und die Klemmeinrichtung ein Sperrelement aufweist, wobei das Rastelement ausgebildet ist, mit dem Sperrelement derart zusammenzuwirken, dass der Manipulator in dem Vormontagezustand der Befestigungsanordnung vor dem ungewollten Lösen in die zweite Richtung gesichert ist.

Bevorzugt ist vorgesehen, dass das Rastelement mindestens eine Rastnase und das Sperrelement mindestens eine Anlagewandung aufweist, wobei in dem Vormontagezustand der Befestigungsanordnung die mindestens eine Anlagewandung zumindest bereichsweise an einer Kante der mindestens einen Rastnase anliegt und zwar derart, dass der Manipulator vor dem ungewollten Lösen in die zweite Richtung gesichert ist.

Die Bereitstellung einer vormontierten Befestigungsanordnung erlaubt es die Vorbefestigung der Befestigungsanordnung bzw. der Fahrzeugkomponente an dem Fahrzeugverkleidungsteil deutlich wirtschaftlicher zu gestalten, da die Befestigungsanordnung bereits vormontiert bereitgestellt werden kann und ein Monteur nur noch die eigentliche Befestigung an dem Fahrzeugverkleidungsteil vornehmen muss, indem er die vormontierte Befestigungsanordnung in die Öffnung des Fahrzeugverkleidungsteils einführt, die dabei an dem Fahrzeugverkleidungsteil befestigt wird. Das Wirkflächenpaar "Anlagewandung der Klemmeinrichtung und Kante des Rastelements bzw. der Rastnase" verhindert, dass sich der Manipulator und die Klemmeinrichtung unbeabsichtigt voneinander lösen, beispielsweise aufgrund der während des Einführvorgangs in die Öffnung des Fahrzeugverkleidungsteils wirkenden Gravitationskräfte.

Bei der erfindungsgemäßen Befestigungsanordnung ist vorgesehen, dass das Spreizelement mindestens eine Spreizlasche aufweist, wobei die mindestens eine Spreizlasche einen ersten Bereich und einen sich an den ersten Bereich anschließenden zweiten Bereich aufweist, wobei der zweite Bereich in den zweiten Zustand des Spreizelements zumindest bereichsweise an dem Randbereich des Fahrzeugverkleidungsteils anliegt.

Hierdurch wird eine zuverlässige Aufnahme, insbesondere klemmende Aufnahme, des Fahrzeugverkleidungsteils zwischen dem Spreizelement und dem Anlageelement der Klemmeinrichtung erzielt, wobei ein gewisses geringes Spiel zwischen den einzelnen Komponenten im befestigten Zustand erhalten wird, so dass die vorbefestigte Befestigungsanordnung in mindestens einer Richtung quer zur Einführrichtung der Befestigungsanordnung positionierbar bzw. ausrichtbar bleibt.

Es ist gemäß der Erfindung vorgesehen, dass die mindestens eine Spreizlasche im Querschnitt S-förmig ausgebildet ist.

Diese Ausgestaltung erlaubt ein besonders einfaches und schonendes Auslösen der Spreizbewegung des Spreizelements der Klemmeinrichtung, da zunächst ein Linienkontakt zwischen Manipulator, insbesondere Gleitstruktur, und Spreizelement erzeugt wird, der sich während des mittels der Axialbewegung des Manipulators induzierten Verdrängens bzw. Spreizens des Spreizelements zu einem Flächenkontakt wandelt, so dass die erforderliche Klemmkraft zur Aufnahme des Randbereichs des Fahrzeugverkleidungsteils unter Beibehaltung eines gewissen geringen Spiels zuverlässig aufgebaut und aufrechterhalten werden kann.

Gemäß einer vorteilhaften Weiterbildung der erfindungsgemäßen Befestigungsanordnung ist vorgesehen, dass der Manipulator als Lagerbock für die Fahrzeugkomponente ausgebildet ist und die Fahrzeugkomponente eine Fahrzeugsonnenblende, ein Fahrzeughaltegriff, ein Fahrzeuglichtmodul oder eine Fahrzeugkonsole ist oder, dass der Manipulator als Fahrzeughaltegriff, Fahrzeuglichtmodul oder Fahrzeugkonsole ausgebildet ist.

Insbesondere ist vorgesehen, dass der Manipulator als Gegenlagerböckchen für eine Fahrzeugsonnenblende ausgebildet ist und die Fahrzeugkomponente eine Fahrzeugsonnenblende ist.

Gemäß einer vorteilhaften Weiterbildung der erfindungsgemäßen Befestigungsanordnung ist vorgesehen, dass die Klemmeinrichtung und der Manipulator aus Kunststoff, Metall oder einer Kombination hiervon ausgebildet sind.

Hierdurch kann die Befestigungsanordnung bzw. ein mittels der Befestigungsanordnung vorbefestigtes System hinsichtlich ihrer/seiner Lebensdauer, Stabilität und im Hinblick auf optische Aspekte hin individuell angepasst bzw. ausgestaltet werden.

Gemäß einem weiteren Aspekt der Erfindung ist ein System aus einem Fahrzeugverkleidungsteil, insbesondere einem Fahrzeuginnenverkleidungsteil, und einer mittels der Befestigungsanordnung der zuvor beschriebenen Art vorbefestigten Fahrzeugkomponente, insbesondere einer Fahrzeuginnenkomponente, zum Befestigen an einer Fahrzeugstruktur, insbesondere an einem Fahrzeugkarosserieteil, vorgesehen, wobei der Manipulator ein Rastelement aufweist, wobei das Rastelement ausgebildet ist, einen ersten Zustand einzunehmen, in welchem das Rastelement in eine Öffnung der Fahrzeugstruktur einführbar ist, und einen zweiten Zustand einzunehmen, in welchem ein Randbereich der Fahrzeugstruktur, der die Öffnung der Fahrzeugstruktur umgibt, zwischen dem Rastelement und dem Fahrzeugverkleidungsteil aufgenommen, insbesondere verklemmt, ist. Das System weist ferner ein Befestigungselement auf, das ausgebildet ist, mit dem Rastelement zusammenzuwirken und zwar derart, dass das Rastelement nachdem es in die Öffnung der Fahrzeugstruktur eingeführt ist von dem ersten Zustand in den zweiten Zustand überführt ist.

Durch das erfindungsgemäße vorbefestigte System wird eine besonders unkomplizierte, wirtschaftliche und fehlerfreie (End-)montage bzw. -befestigung an einer Fahrzeugstruktur erzielbar, die ähnlich der Vorbefestigung erfolgt und somit ebenfalls ohne zusätzliche Elemente bzw. Befestigungsmittel und blind von einer Seite bzw. Richtung aus vorgenommen werden kann, wobei der Bewegungsablauf und das Zusammenwirken der Teilkomponenten des Systems im Wesentlichen dem der Vorbefestigung entsprechen, sodass entsprechende Vorteile erzielt werden.

Gemäß einer alternativen Ausgestaltung des erfindungsgemäßen Systems ist es vorgesehen, dass die Befestigungsanordnung, insbesondere der Manipulator der Befestigungsanordnung, ausgebildet ist, mittels einer Schraube, eines Clips, eines Niets oder dergleichen mit der Fahrzeugstruktur befestigt zu werden.

Gemäß einer vorteilhaften Weiterbildung des erfindungsgemäßen Systems ist vorgesehen, dass das Befestigungselement relativ zu dem Rastelement bewegbar ist, wobei bei einem Bewegen des Befestigungselements relativ zu dem Rastelement in eine erste Richtung das Rastelement von dem ersten Zustand in den zweiten Zustand überführt wird.

Insbesondere ist vorgesehen, dass das Befestigungselement einen Kopf und einen sich von dem Kopf wegerstreckenden Schaft aufweist, wobei der Schaft des Befestigungselements mit dem Rastelement des Manipulators beim Bewegen des Befestigungselements in die erste Richtung relativ zu dem Rastelement derart zusammenwirkt, dass das Rastelement von dem ersten Zustand in den zweiten Zustand überführt wird.

Gemäß einer vorteilhaften Weiterbildung des erfindungsgemäßen Systems ist vorgesehen, dass das Rastelement federnd spreizbar ausgebildet ist, wobei in einem befestigten Zustand des Systems an der Fahrzeugstruktur bei einem Bewegen des Befestigungselements unter Kraftaufwand in eine zweite Richtung, die entgegengesetzt zu der ersten Richtung ist, das Spreizelement von dem zweiten Zustand zurück in den ersten Zustand überführt wird.

Nachfolgend werden unter Bezugnahme auf die beiliegenden Zeichnungen vorteilhafte Ausführungsformen der erfindungsgemäßen Befestigungsanordnung sowie des erfindungsgemäßen Systems näher beschrieben.

Es zeigen:
- FIG. 1: eine schematische Ansicht einer exemplarischen Ausführungsform des erfindungsgemäßen Systems;
- FIG. 2: eine schematische Ansicht einer exemplarischen Ausführungsform der erfindungsgemäßen Befestigungsanordnung in einem an einem Fahrzeugverkleidungsteil und einer Fahrzeugstruktur befestigten bzw. montierten Zustand;
- FIG. 3: schematisch und in einer Explosionsansicht eine exemplarische Ausführungsform der erfindungsgemäßen Befestigungsanordnung;
- FIG. 4: schematisch und in einer Vorderansicht eine exemplarische Ausführungsform der erfindungsgemäßen Befestigungsanordnung in einem Vormontagezustand;
- FIG. 5: schematisch und in einer Schnittansicht die exemplarische Ausführungsform der erfindungsgemäßen Befestigungsanordnung im Vormontagezustand gemäß FIG. 4 entlang der Schnittlinie A-A;
- FIG. 6: schematisch und in einer teilgeschnittenen Explosionsansicht die exemplarische Ausführungsform des erfindungsgemäßen Systems gemäß FIG. 2;
- FIG. 7: schematisch und in einer Schnittansicht die exemplarische Ausführungsform der erfindungsgemäßen Befestigungsanordnung im Vormontagezustand gemäß FIG. 4 vor einem Einsetzbzw. Einführvorgang in eine Öffnung des Fahrzeugverkleidungsteils;
- FIG. 8: schematisch und in einer Schnittansicht die exemplarische Ausführungsform der erfindungsgemäßen Befestigungsanordnung gemäß FIG. 4 während des Einsetz- bzw. Einführvorgangs in die Öffnung des Fahrzeugverkleidungsteils;
- FIG. 9: schematisch und in einer Schnittansicht die erfindungsgemäße Befestigungsanordnung gemäß FIG. 4 in einem an dem Fahrzeugverkleidungsteil befestigten Zustand;
- FIG. 10: schematisch und in einer Schnittansicht die erfindungsgemäße Befestigungsanordnung gemäß FIG. 9 entlang der Schnittlinie B-B;
- FIG. 11: schematisch und in einer Schnittansicht die erfindungsgemäße Befestigungsanordnung gemäß FIG. 4 bzw. das erfindungsgemäße System gemäß FIG. 1 in einem an der Fahrzeugstruktur befestigten Zustand; und
- FIG. 12: schematisch und in einer Schnittansicht die erfindungsgemäße Befestigungsanordnung bzw. das erfindungsgemäße System gemäß FIG. 11 entlang der Schnittlinie C-C.

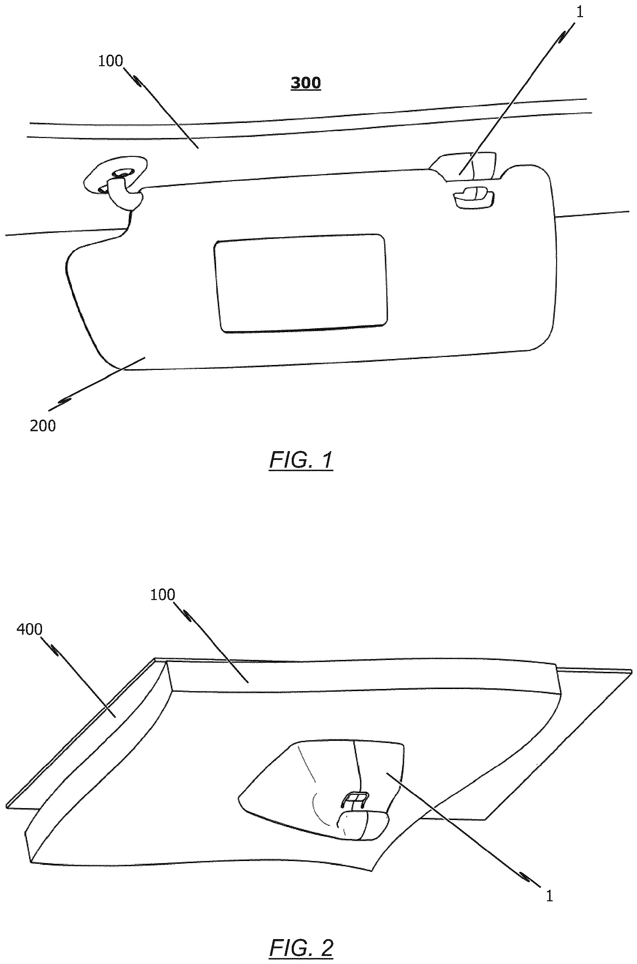

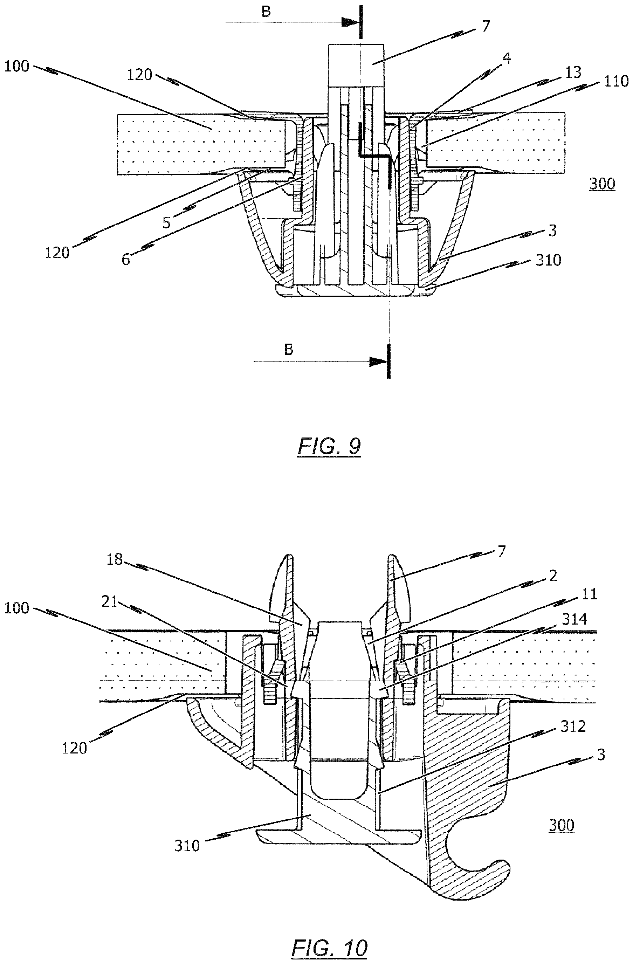

Nachfolgend wir unter Bezugnahme auf die FIGs. 1 bis 12 die erfindungsgemäße Befestigungsanordnung sowie das erfindungsgemäße (vorbefestigte) System näher beschrieben.

Zunächst sei angemerkt, dass die erfindungsgemäße Befestigungsanordnung und das erfindungsgemäße System, obwohl in den FIGs. in Bezug auf eine Fahrzeugsonnenblende dargestellt, auch in Kombination mit oder als andere Fahrzeugkomponente, insbesondere Fahrzeuginnenkomponente, wie beispielsweise ein Fahrzeughaltegriff, ein Fahrzeuglichtmodul, eine Fahrzeugdachkonsole und dergleichen, verwendet werden können.

FIG. 1 zeigt eine schematische Ansicht des erfindungsgemäßen Systems 300 aus einem Fahrzeugverkleidungsteil 100, insbesondere einem Fahrzeuginnenverkleidungsteil, wie beispielsweise einem Dachhimmel und dergleichen, und einer daran mittels der erfindungsgemäßen Befestigungsanordnung 1 vorbefestigten

Fahrzeugkomponente 200, insbesondere Fahrzeuginnenkomponente, wie beispielsweise eine Fahrzeugsonnenblende und dergleichen.

Auf die konkrete Ausgestaltung bzw. Ausführung der Fahrzeugsonnenblende wird im Folgenden nicht näher eingegangen, es sei jedoch angemerkt, dass diese jegliche bekannte Ausgestaltung bzw. Ausführung annehmen kann.

FIG. 2 zeigt ferner das in FIG. 1 dargestellte vorbefestigte System 300 (ohne die Fahrzeugkomponente 200), das an einer Fahrzeugstruktur 400, insbesondere einem Fahrzeugkarosserieteil, befestigt bzw. endmontiert ist.

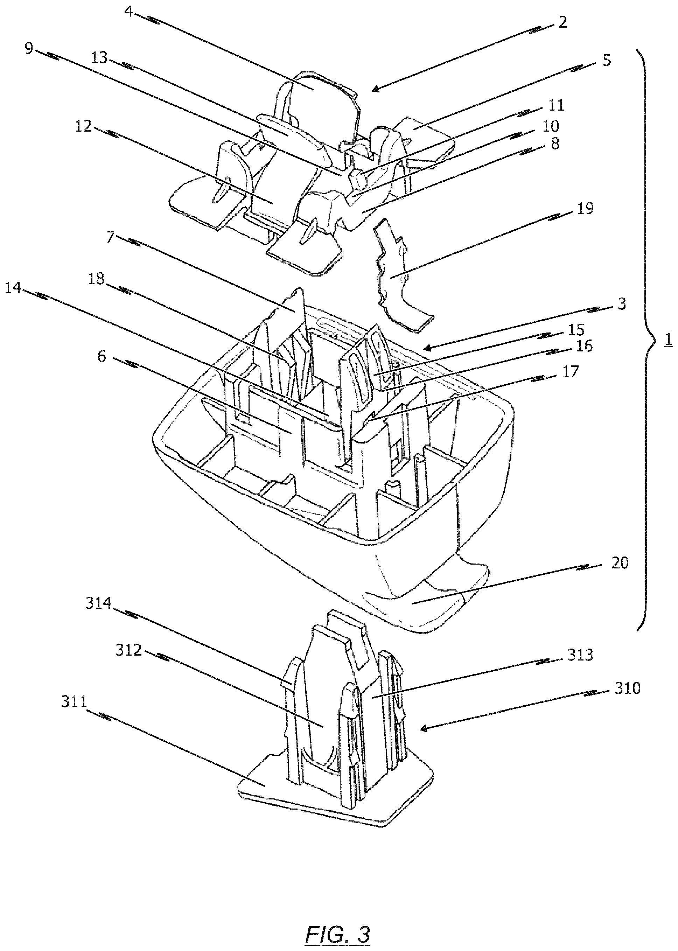

Nachfolgend wird unter Bezugnahme auf die FIGs. 3 bis 12 die erfindungsgemäße Befestigungsanordnung 1 sowie das erfindungsgemäße (vorbefestigte) System 300 und deren Montage bzw. Art und Weise der Befestigung näher beschrieben.

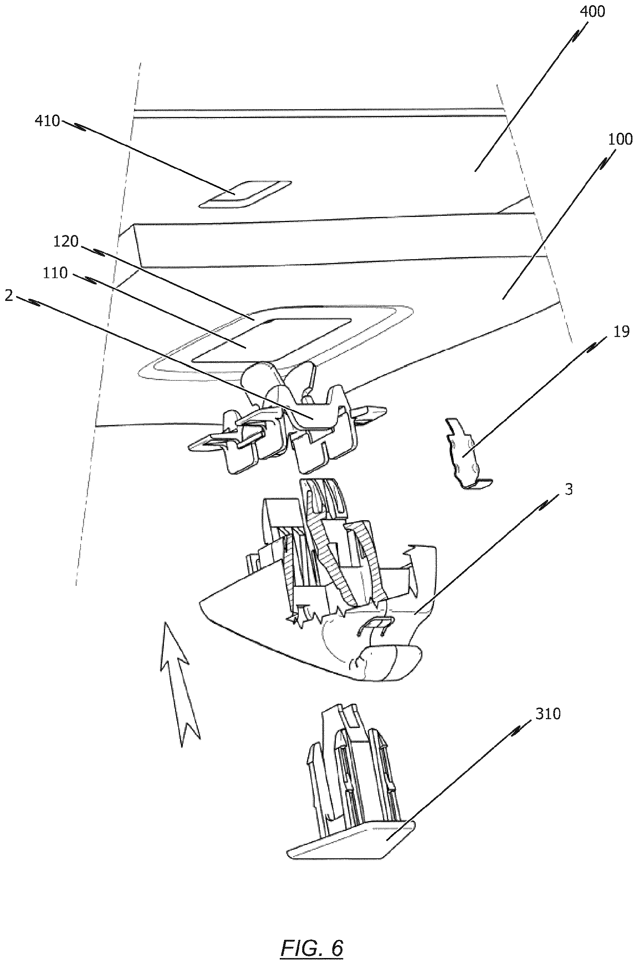

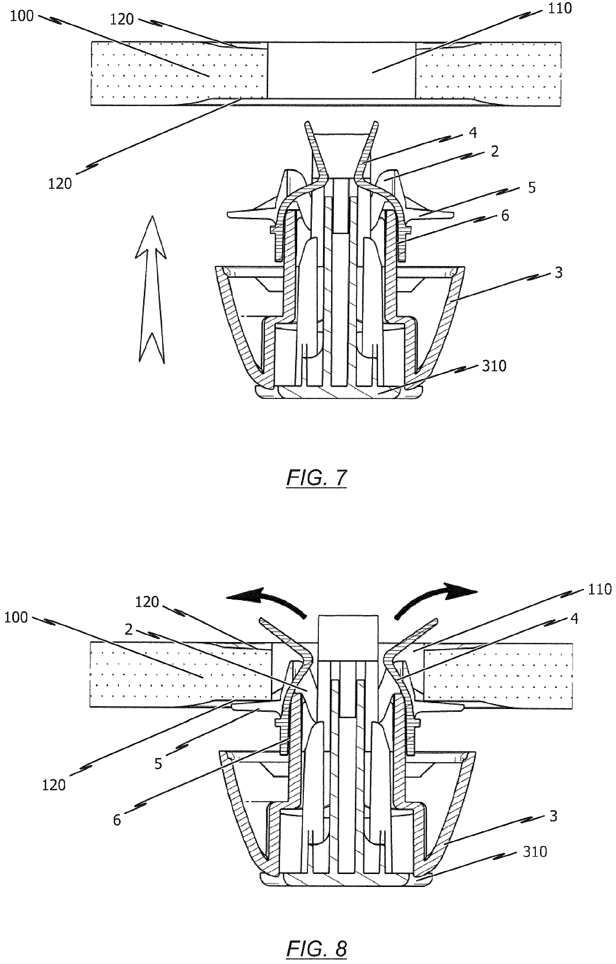

Die erfindungsgemäße Befestigungsanordnung 1 ist mehrteilig ausgebildet und weist eine Klemmeinrichtung 2 und einen Manipulator 3 auf. Die Klemmeinrichtung 2 der Befestigungsanordnung 1 weist ein Spreizelement 4 und ein Anlageelement 5 auf. Das Spreizelement 4 kann einen ersten Zustand, in welchem das Spreizelement 4 in eine Öffnung 110 des Fahrzeugverkleidungsteils 100 einführbar ist, und einen zweiten Zustand, in welchem ein Randbereich 120 des Fahrzeugverkleidungsteils 100, der die Öffnung 110 des Fahrzeugverkleidungsteils 100 umgibt, zwischen dem Spreizelement 4 und dem Anlageelement 5 aufgenommen ist, einnehmen bzw. zwischen diesen Zuständen reversibel überführt werden. In dem zweiten Zustand des Spreizelements 4 ist der Randbereich 120 des Fahrzeugverkleidungsteils 100, insbesondere klemmend, zwischen dem Spreizelement 4 und dem Anlageelement 5 der Klemmeinrichtung 2 aufgenommen, wobei stets ein gewisses geringes Spiel zwischen den die Verbindung ausbildenden Komponenten (d.h., Anlageelement 5, Spreizelement 4 und Randbereich 120) vorhanden bleibt, so dass die Befestigungsanordnung 1 und eine mittels dieser Befestigungsanordnung 1 vorbefestigte Fahrzeugkomponente 200 in mindestens eine quer zur Einführrichtung (siehe Pfeil in FIG. 6 oder 7) verlaufenden Richtung positionierbar bzw. ausrichtbar bleibt. Der Manipulator 3 ist ferner derart ausgebildet bzw. ausgestaltet, dass er mit dem Spreizelement 4 der Klemmeinrichtung 2 zusammenwirken kann und zwar derart, dass das Spreizelement 4 nachdem es in die Öffnung 110 des Fahrzeugverkleidungsteils 100 eingeführt ist von seinem ersten Zustand in seinen zweiten Zustand überführt ist.

Dieser Manipulationsvorgang (Überführungsvorgang) des Spreizelements 4 von seinem ersten Zustand in seinen zweiten Zustand wird dadurch erzielt, dass der Manipulator 3 relativ zur Klemmeinrichtung 2, sowie erfindungsgemäß relativ zum Spreizelement 4 und zum Anlageelement 5, bewegbar ist. Erfindungsgemäß ist der Manipulator 3 in zwei Richtungen relativ zur Klemmeinrichtung 2 bewegbar, nämlich in eine erste Richtung, die der Einführrichtung der Befestigungsanordnung 1 entspricht, und in eine zweite Richtung, die entgegengesetzt zur ersten Richtung ist. Beim Bewegen des Manipulators 3 in die erste Richtung überführt der Manipulator 3 das Spreizelement 4 von dem ersten Zustand in den zweiten Zustand. Ein Bewegen des Manipulators 3 in die zweite Richtung wird vorzugsweise nur dann durchgeführt bzw. ist nur dann beabsichtigt, wenn die Befestigungsanordnung 1 von dem Fahrzeugverkleidungsteil 100 gelöst bzw. demontiert werden soll, wobei das Spreizelement 4 hierbei von dem zweiten Zustand zurück in den ersten Zustand überführt wird. Das Spreizelement 4 ist hierzu insbesondere federnd spreizbar ausgeführt.

Zum Manipulieren des Spreizelements 4, d.h. zum Überführen des Spreizelements 4 von dem ersten Zustand in den zweiten Zustand, weist der Manipulator 3 eine Gleitstruktur 6 auf, die vorzugsweise als, insbesondere schräge oder schrägverlaufende, Gleitwandung bzw. Gleitfläche, ausgebildet ist. Bei einem Bewegen des Manipulators 3 in die erste Richtung gelangt das Spreizelement 4 mit der Gleitstruktur 6 in Kontakt, wobei sich zunächst ein Linienkontakt zwischen beiden Elementen 4, 6 ausbildet. Das Spreizelement 4 gleitet an dieser Gleitstruktur 6 entlang bzw. ab, wobei sich der Linienkontakt allmählich zu einem Flächenkontakt ausbaut. Beide Elemente 4, 6 wirken bei diesem Vorgang zusammen und zwar derart, dass das Spreizelement 4 vom ersten Zustand in den zweiten Zustand überführt wird, wobei sich die erforderliche Klemmkraft zur Aufnahme des Randbereichs 120 mit Spiel zwischen dem Spreizelement 4 und dem Anlageelement 5 aufbaut. Dieser Vorgang ist insbesondere in den FIGs. 7 bis 10 dargestellt.

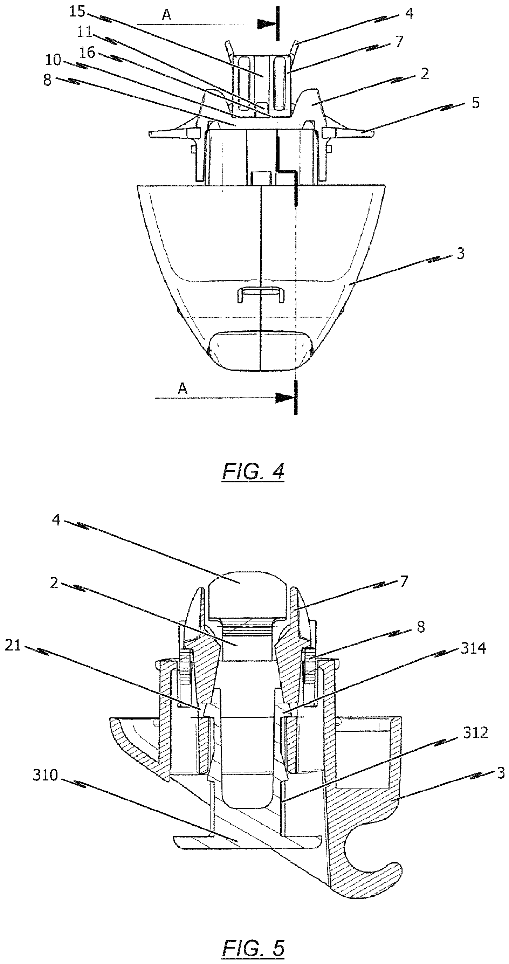

Die erfindungsgemäße Befestigungsanordnung 1 kann ferner einen sogenannten Vormontagezustand einnehmen bzw. ist in diesen Zustand bringbar. In diesem Vormontagezustand ist der Manipulator 3 an bzw. mit der Klemmeinrichtung 2 befestigt, so dass bzw. derart, dass der Manipulator 3 vor einem ungewollten Lösen in die zweite Richtung (d.h., Richtung entgegengesetzt zur Einführrichtung der Befestigungsanordnung 1) gesichert ist. Unter einem ungewollten Lösen ist hierbei beispielsweise ein Lösen aufgrund von Gravitationskräften zu verstehen, hingegen nicht ein (beabsichtigtes) Lösen unter Kraftaufwand zur Demontage der Befestigungsanordnung 1 von dem Fahrzeugverkleidungsteil 100. Die Sicherung des Manipulators 3 an bzw. mit der Klemmeinrichtung 2 wird vorzugsweise mittels einer rastenden Sicherung bzw. eines Verrastens des Manipulators 3 an bzw. mit der Klemmeinrichtung 2 erzielt. Hierzu weist der Manipulator 3 ein Rastelement 7 und die Klemmeinrichtung 2 ein Sperrelement 8 auf. Diese beiden Elemente 7, 8 wirken im Vormontagezustand der Befestigungsanordnung 1 derart zusammen, dass der Manipulator 3, wie zuvor beschrieben, vor dem ungewollten Lösen von der Klemmeinrichtung 2 gesichert ist. Der Vormontagezustand der Befestigungsanordnung 1 ist insbesondere in den FIGs. 4 und 5 dargestellt.

Gemäß der erfindungsgemäßen Befestigungsanordnung 1 ist vorgesehen, das das Spreizelement 4 als mindestens eine Spreizlasche, vorzugsweise genau zwei voneinander beabstandete und gegenüberliegende Spreizlaschen, ausgebildet ist. Die Spreizlaschen erstrecken sich von der Klemmeinrichtung 2 von einem ersten Ende aus nach Außen weg und sind vorzugsweise unmittelbar an einer in der Klemmeinrichtung 2 ausgebildeten Durchgangsöffnung 9 angeordnet bzw. umgeben diese Durchgangsöffnung 9 zumindest bereichsweise, die sich von dem ersten Ende zu einem dem ersten Ende gegenüberliegenden zweiten Ende der Klemmeinrichtung 2 erstreckt und zum Aufnehmen bzw. Einführen des Manipulators 3 vorgesehen bzw. ausgebildet ist. Das Anlageelement 5 ist in einem äußeren Bereich (Randbereich) der Klemmeinrichtung 2 ausgebildet, vorzugsweise als vier voneinander beabstandete Anlageplatten, die in den Ecken der Klemmeinrichtung 2 vorgesehen sind. Das Anlageelement 5 gelangt im vorbefestigten Zustand der Befestigungsanordnung 1 an dem Fahrzeugverkleidungsteil 100 in Anlage mit einer Oberfläche des die Öffnung 110 des Fahrzeugverkleidungsteils 100 umgebenen Randbereichs 120, so dass der Randbereich 120 des Fahrzeugverkleidungsteils 100 mit Spiel zwischen dem Spreizelement 4 bzw. den Spreizlaschen und dem Anlageelement 5 bzw. den Anlageplatten aufgenommen, insbesondere verklemmt, ist.

Das Sperrelement 8 der Klemmeinrichtung 2 ist als Anlagestruktur ausgebildet.

Das als Anlagestruktur ausgebildete Sperrelement 8 weist mindestens eine Anlagewandung 10, vorzugsweise zwei voneinander beabstandete und gegenüberliegende Anlagewandungen 10, die ebenfalls vorzugsweise unmittelbar an der in der Klemmeinrichtung 2 ausgebildeten Durchgangsöffnung 9 angeordnet bzw. diese zumindest bereichsweise umgibt, und ein elastisches Element 11 auf, welches vorzugsweise mittig an der mindestens einen Anlagewandung 10 ausgebildet bzw. daran angeformt ist und sich von dem Sperrelement 8 bzw. der Anlagewandung 10 wegerstreckt.

Das, erfindungsgemäß als mindestens eine Spreizlasche ausgebildete, Spreizelement 4 weist einen ersten Abschnitt 12 sowie einen sich an den ersten Abschnitt 12 anschließenden zweiten Abschnitt 13 auf. Im zweiten Zustand des Spreizelements 4 ist der erste Abschnitt 12 in der Öffnung 110 des Fahrzeugverkleidungsteils 100, vorzugsweise parallel zur die Öffnung 110 definierenden Wandung verlaufend, angeordnet und der zweite Abschnitt 13 liegt an einer der von dem Anlageelement 5 kontaktierten Oberfläche des Randbereichs 120 des Fahrzeugverkleidungsteils 100 gegenüberliegenden Oberfläche des Randbereichs 120 an, so dass der Randbereich 120 zwischen dem Anlageelement 5 und dem zweiten Abschnitt 13 des Spreizelements 4 aufgenommen, insbesondere verklemmt, ist. Das als mindestens eine Spreizlasche ausgebildete Spreizelement 4 weist erfindungsgemäß eine im Querschnitt S-förmige Formgebung auf, die eine besonders vorteilhafte Kontakterzeugung zwischen Manipulator 3, insbesondere Gleitstruktur 6, und Rastelement 4 begünstigt.

Ferner ist gemäß der Ausführungsform das Rastelement 7 des Manipulators 3 als mindestens eine Rastnase, vorzugsweise zwei voneinander beabstandete und gegenüberliegende Rastnasen, ausgebildet. Die Rastnasen erstrecken sich von dem Manipulator 3 von einem ersten Ende nach Außen weg und sind vorzugsweise unmittelbar an einer im Manipulator 3 ausgebildeten Durchgangsöffnung 14 angeordnet bzw. umgeben diese Durchgangsöffnung 14 zumindest bereichsweise, die sich von dem ersten Ende zu einem dem ersten Ende gegenüberliegenden zweiten Ende des Manipulators 3 erstreckt und zum Aufnehmen bzw. Einführen eines Befestigungselements 310 des Systems 300 vorgesehen bzw. ausgebildet ist.

Das, vorzugsweise als mindestens eine Rastnase ausgebildete, Rastelement 7 ist dazu ausgebildet, mit dem Sperrelement 8 der Klemmeinrichtung 2 zusammenzuwirken, so dass ein Vormontagezustand der Befestigungsanordnung 1 ausgebildet werden kann. Hierfür weist das Rastelement 7 an einer von der Durchgangsöffnung 14 wegweisenden Oberfläche einen konkaven Bereich auf, entlang dem das Sperrelement 8 zum Ausbilden des Vormontagezustands abgleiten bzw. entlanggleiten kann. Der konkave Bereich dieser Oberfläche weist vorzugsweise eine Ausnehmung 15 auf, in der das elastische Element 11 des Sperrelements 8 während des Gleitvorgangs geführt wird. In den Vormontagezustand der Befestigungsanordnung 1 liegt die Anlagewandung 10 an einer durch den konkaven Bereich ausgebildeten Kante 16 des Rastelements 7 an, so dass der Manipulator 3 vor einem ungewollten Lösen von der Klemmeinrichtung 2 gesichert ist. Das Rastelement 7 weist ferner mindestens eine weitere Ausnehmung 17 auf, die in einen an den konkaven Bereich angrenzenden Bereich ausgebildet ist und in der das elastische Element 11 in einem mit dem Fahrzeugverkleidungsteil 100 befestigten Zustand der Befestigungsanordnung 1 aufgenommen ist. Hierdurch wird eine zusätzliche Sicherung des Manipulators 3 vor dem ungewollten Lösen von der Klemmeinrichtung 2 im vorbefestigten Zustand geschaffen. Bei einem Demontagevorgang (d.h., einem gewollten Bewegen bzw. Lösen in die zweite Richtung unter Kraftaufwand) wird das elastische Element 11 derart verformt bzw. umgebogen, dass es aus der in der Ausnehmung 17 gesicherten Position freigegeben wird.

Das, vorzugsweise als mindestens eine Rastnase ausgebildete, Rastelement 7 weist ferner an einer in Richtung der Durchgangsöffnung 14 weisenden Oberfläche mindestens eine Einführrippe 18, vorzugsweise zwei voneinander beabstandete Einführrippen 18, auf, die dazu ausgebildet ist, mit dem Befestigungselement 310 des Systems 300 derart zusammenzuwirken, dass das vorbefestigte System 300 an einer Fahrzeugstruktur 400 befestigt werden kann. Auf diesen (Endmontage- bzw. -befestigungsvorgang wird im weiteren Verlauf der Beschreibung noch eingegangen.

Die Gleitstruktur 6 ist als mindestens Gleitfläche bzw. Gleitwandung, vorzugsweise zwei voneinander beabstandete und gegenüberliegende Gleitflächen bzw. Gleitwandungen, ausgebildet, die ebenfalls unmittelbar an der in dem Manipulator 3 ausgebildeten Durchgangsöffnung 9 angeordnet bzw. diese zumindest bereichsweise umgibt. Der Manipulator 3 weist ferner ein Federelement 19 auf, das an dem Manipulator 3 befestigt werden kann und dazu dient, die Fahrzeugkomponente 200 an dem Manipulator 3 klemmend zu lagern, so dass eine Axialbewegung der Fahrzeugkomponente 200 im gelagerten Zustand gehemmt ist, ein Verschwenken bzw. Verlagern der Fahrzeugkomponente 200 zwischen mindestens zwei Ausrichtungen jedoch möglich ist.

Grundsätzlich können die Teilkomponenten, d.h., die Klemmeinrichtung 2 und der Manipulator 3 aus Kunststoff oder Metall ausgebildet sein. Es ist jedoch auch möglich eine Kombination dieser Werkstoffe zu verwenden. Der Manipulator 3 ist ferner vorzugsweise als Gegenlagerbock oder Gegenlagerböckchen ausgebildet, insbesondere als hakenförmiger Gegenlagerbock oder Gegenlagerböckchen, sodass die Fahrzeugkomponente 200, insbesondere eine Fahrzeugsonnenblende, mittels des Federelements 19 in einer durch die Hakenform ausgebildeten Ausnehmung 20 schwenkbar gelagert werden kann. Es ist jedoch auch vorstellbar, dass der Manipulator 3 selbst als Fahrzeugkomponente, insbesondere als Fahrzeughaltegriff, Fahrzeuglichtmodul, Fahrzeugkonsole oder dergleichen, ausgebildet ist.

Die Vorbefestigung der Fahrzeugkomponente 200 und der Befestigungsanordnung 1 an dem Fahrzeugverkleidungsteil 100 zur Erzeugung des vorbefestigten Systems 300 erfolgt wie folgt:
Zunächst wir die erfindungsgemäße Befestigungsanordnung 1 in den Vormontagezustand gebracht, in welchem der Manipulator 3 an bzw. mit der Klemmeinrichtung 2 befestigt, insbesondere verrastet, ist. In diesem Zustand befindet sich das Spreizelement 4 der Klemmeinrichtung 2 in seinem ersten Zustand. Die Befestigungsanordnung 1 wird nur an das Fahrzeugverkleidungsteil 100 herangeführt, wobei die Befestigungsanordnung 1 mittels des Spreizelements 4 in die Öffnung 110 des Fahrzeugverkleidungsteils 100 eingeführt wird bis das Anlageelement 5 der Klemmeinrichtung 2 mit der einen Oberfläche des Randbereichs 120 des Fahrzeugverkleidungsteils 100 in Anlage kommt. Nun wird der Manipulator 3 relativ zur Klemmeinrichtung 2 weiter in Einführrichtung bewegt, wobei die Gleitstruktur 6 des Manipulators 3 mit dem Spreizelement 4 der Klemmeinrichtung 2 zusammenwirkt und zwar derart, dass das Spreizelement 4 von dem ersten Zustand in den zweiten Zustand überführt wird. Im zweiten Zustand ist die Befestigungsanordnung 1 an dem Fahrzeugverkleidungsteil 100 vorbefestigt, indem das Fahrzeugverkleidungsteil 100 zwischen dem Spreizelement 4 und dem Anlageelement 5 aufgenommen, insbesondere verklemmt, ist. Wichtig ist, dass in diesem vorbefestigten Zustand die Befestigungsanordnung 1 noch in mindestens eine Richtung quer zur Einführrichtung positionierbar bzw. ausrichtbar ist. Im vorbefestigten Zustand ist die Fahrzeugkomponente 200 an der Befestigungsanordnung 1, insbesondere dem Manipulator 3, gelagert.

Soll die Befestigungsanordnung 1 wieder von dem Fahrzeugverkleidungsteil 100 gelöst werden, beispielsweise für Reparaturzwecke und dergleichen, so muss lediglich der Manipulator 3 entgegen der Einführrichtung (d.h., in zweiter Richtung) unter Kraftaufwand bewegt werden, wodurch sich das Spreizelement 4 bedingt durch seine federnd spreizbare Ausgestaltung zurück in den ersten Zustand bewegt. Entgegen zu dem Einführvorgang wandelt sich beim Demontagevorgang der vorhandene Flächenkontakt zwischen Manipulator 3, insbesondere Gleitstruktur 6 des Manipulators 3, und Spreizelement 4 wieder zu einem Linienkontakt um, bis die beiden Komponenten 3 bzw. 6, 4 der Befestigungsanordnung 1 einander nicht mehr kontaktieren. Wie zuvor beschrieben verformt bzw. biegt sich bei dem Demontagevorgang das elastische Element 11 des Sperrelements 8 derart, dass es aus der Ausnehmung 17 im Rastelement 7 entfernt werden kann.

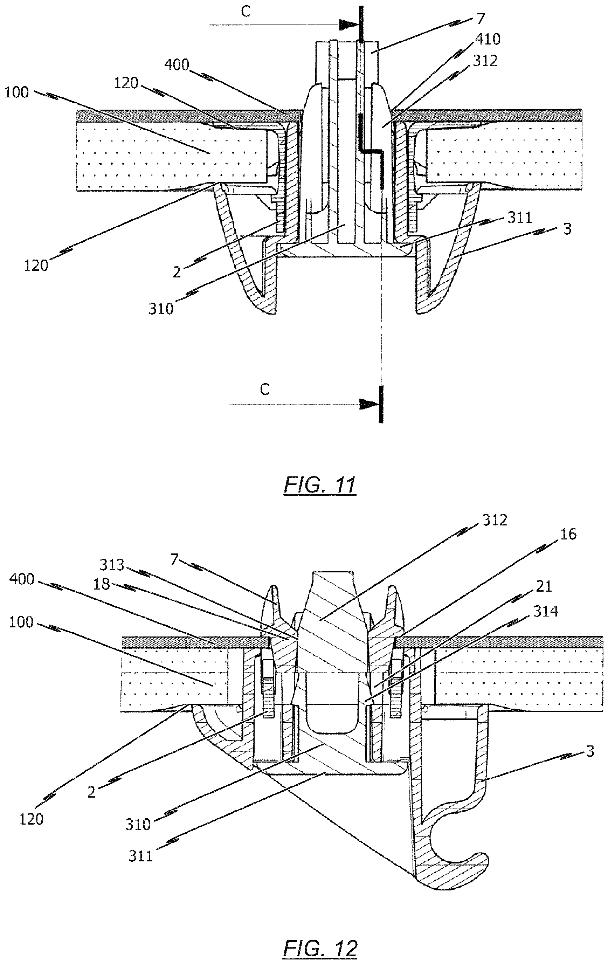

Im Folgenden wird nun noch insbesondere unter Bezugnahme auf die FIGs. 11 und 12 ein sogenannter (End-)montage- bzw. -befestigungsvorgang zum Befestigen bzw. Anbinden des vorbefestigten Systems 300 an der Fahrzeugstruktur 400 beschrieben.

In dem vorbefestigten Zustand des Systems 300 ragt das Rastelement 7 des Manipulators 3 zumindest bereichsweise über das Fahrzeugverkleidungsteil 100 hinaus. Das vorbefestigte System 300 kann somit mittels des über das Fahrzeugverkleidungsteil 100 hinausragenden Bereichs des Rastelements 7 in eine Öffnung 410 der Fahrzeugstruktur 400 eingeführt werden. Entsprechend dem Spreizelement 4 der Klemmeinrichtung 2 ist das Rastelement 7 ausgebildet, einen ersten Zustand einzunehmen, in welchem das Rastelement 7 in die Öffnung 410 der Fahrzeugstruktur 400 einführbar ist, und einen zweiten Zustand, in welchem ein Randbereich der Fahrzeugstruktur 400, der die Öffnung 410 der Fahrzeugstruktur 400 umgibt, zwischen dem Rastelement 7, insbesondere der Kante 16 des Rastelements 7, und dem Fahrzeugverkleidungsteil 100 aufgenommen ist, einzunehmen bzw. zwischen diesen Zuständen reversibel überführt zu werden. In dem zweiten Zustand des Rastelements 7 ist der Randbereich der Fahrzeugstruktur 400 zwischen dem Rastelement 7 und dem Fahrzeugverkleidungsteil 100 aufgenommen, insbesondere verklemmt, und zwar derart, dass das System 300 nicht mehr relativ zur Fahrzeugstruktur 400 bewegt werden kann.

Das System 300 weist ferner das zuvor bereits erwähnte Befestigungselement 310 auf, das ausgebildet ist, mit dem Rastelement 7 des Manipulators 3 zusammenzuwirken und zwar derart, dass das Rastelement 7 nachdem es in die Öffnung 410 der Fahrzeugstruktur 400 eingeführt ist von seinem ersten Zustand in seinen zweiten Zustand überführt ist.

Dieser Überführvorgang des Rastelements 7 von seinem ersten Zustand in seinen zweiten Zustand wird dadurch ermöglicht, dass das Befestigungselement 310 relativ zum Manipulator 3, insbesondere relativ zum Rastelement 7, bewegbar ist. Grundsätzlich kann das Befestigungselement 310, wie der Manipulator 3 bei der Vorbefestigung des Systems 300, in zwei Richtungen relativ zum Manipulator 3 bewegt werden und zwar in eine erste Richtung, die der Einführrichtung des Rastelements 7 entspricht, und in eine zweite Richtung, die entgegengesetzt zur ersten Richtung ist. Beim Bewegen des Befestigungselements 310 in die erste Richtung überführt das Befestigungselement 310 das Rastelement 7 von dem ersten Zustand in den zweiten Zustand. Ein Bewegen des Befestigungselements 310 in die zweite Richtung wird vorzugsweise nur dann durchgeführt, wenn ein Lösen des Systems 300 von der Fahrzeugstruktur 400 angestrebt wird, wobei das Rastelement 7 bei einem derartigen Vorgang von dem zweiten Zustand zurück in den ersten Zustand überführt wird und somit das System 300 von der Fahrzeugstruktur 400 wieder gelöst werden kann. Das Rastelement 7 ist sofern ein Lösen des Systems 300 von der Fahrzeugstruktur 400 beabsichtigt ist federnd spreizbar ausgeführt.

Das Befestigungselement 310 weist einen Kopf 311 und einen Schaft 312 auf, wobei der Schaft 312 des Befestigungselements 310, insbesondere mit mindestens einer Gleitfläche 313, mit dem Rastelement 7 des Manipulators 3, insbesondere mit der mindestens einen Einführrippe 18, beim Bewegen des Befestigungselements 310 in die erste Richtung relativ zu dem Rastelement 7 derart zusammenwirkt, dass das Rastelement 7 von dem ersten Zustand in den zweiten Zustand überführt wird. Der Schaft 312 des Befestigungselements 310 kann jedwede Formgebung, beispielsweise einen runden, einen rechteckigen oder einen dreieckigen Querschnitt, aufweisen, wobei sich die Formgebung des Schafts 312 nach dem Querschnitt der Durchgangsöffnung 14 des Manipulators 3 richtet, die ebenfalls jedwede Formgebung, wie beispielsweise einen runden, einen rechteckigen oder einen dreieckigen Querschnitt, aufweisen kann.

Der Schaft 312 des Befestigungselements 310 kann zudem über eine Vielzahl von Rasthaken 314 oder dergleichen verfügen, die es erlauben das Befestigungselement 310, insbesondere den Schaft 312, an bzw. mit dem Manipulator 3 zu befestigen, bevor das System 300 an bzw. mit der Fahrzeugstruktur 400 befestigt wird oder aber auch bereits in dem Vormontagezustand der Befestigungsanordnung 1. Die Vielzahl von Rasthaken 314 weist mindestens zwei voneinander in Haupterstreckungsrichtung des Schafts 312 beabstandete Rasthaken 314 auf. Bei einem unrunden Querschnitt des Schafts 312 kann es vorgesehen sein, dass an jeder Kante bzw. Ecke des Schafts 312 mindestens zwei voneinander beabstandete Rasthaken 314 ausgebildet sind. Bei einem runden Querschnitt des Schafts 312 kann es vorgesehen sein, dass um den Umfang des Schafts 312 herum eine Vielzahl von mindestens zwei voneinander beabstandeten Rasthaken 314 ausgebildet ist. Die Vielzahl von Rasthaken 314 greift zur Sicherung bzw. Befestigung des Befestigungselement 310 am Manipulator 3 in entsprechende Ausnehmungen 21 am bzw. im Manipulator 3 ein, insbesondere in Ausnehmungen 21 in der Durchgangsöffnung 14 des Manipulators 3, und sichert das Befestigungselement 310 somit vor einem ungewollten Lösen von dem Manipulator 3 in die zweite Richtung einerseits während der Anbringung des Systems 300 an der Fahrzeugstruktur 400 und andererseits im (end-)montierten bzw. -befestigten Zustand an der Fahrzeugstruktur 400.

Alternativ zu der zuvor beschriebenen Vorgehensweise einer (End-)montage bzw. -befestigung des vorbefestigten Systems 300 an der Fahrzeugstruktur 400 ist es ebenfalls vorstellbar, anstelle des Befestigungselements 310, das vorbefestigte System 300 mittels einer Schraube, eines (Metall-)clips, einer Niete oder dergleichen an der Fahrzeugstruktur 400 zu befestigen. Hierbei wird die (End-)montage bzw. -befestigung des vorbefestigten Systems 300 an der Fahrzeugstruktur 400 nicht mittels des Rastelements 7, sondern unmittelbar über eine form- und/oder kraftschlüssige Verbindung der Schraube, des (Metall-)clips, der Niete oder dergleichen mit dem Manipulator 3 und der Fahrzeugstruktur 400 erzeugt. Der Manipulator 3 kann in einem solchen Fall über eine zusätzliche an dem Manipulator 3 schwenkbar bzw. klappbar gelagerte Abdeckung verfügen, die die Durchgangsöffnung 14, in welche die Schraube oder dergleichen zum Befestigen des Systems 300 an der Fahrzeugstruktur 400 aufnehmbar bzw. aufgenommen ist, verschließen bzw. abdecken kann.

Ist eine Vorbefestigung einer Fahrzeugkomponente 200 an einem Fahrzeugverkleidungsteil 100 nicht erwünscht, so kann die Fahrzeugkomponente 200 auch unmittelbar sowohl mit dem Fahrzeugverkleidungsteil 100 und einer Fahrzeugstruktur 400 befestigt werden, wobei auf einen Einsatz der Klemmeinrichtung 2 verzichtet werden kann, indem die Fahrzeugkomponente 200 lediglich unter Verwendung des Manipulators 3 und des Befestigungselement 310 oder einer Schraube, eines (Metall-)clips, einer Niete oder dergleichen an dem Fahrzeugverkleidungsteil 100 und der Fahrzeugstruktur 400 befestigt wird.

Zusammenfassend ergibt sich somit eine Befestigungsanordnung 1 und ein vorbefestigtes System 300, welche besonders unkompliziert und blind von einer Seite aus mit einem Fahrzeugverkleidungsteil 100 und mit einer Fahrzeugstruktur 400 befestigt werden können, indem lediglich durch ein Zusammenwirken der Teilkomponenten der Befestigungsanordnung 1 und des vorbefestigten Systems 300 bei einem Einführvorgang die jeweilige Befestigung bzw. Fixierung realisiert wird.

Die Erfindung ist nicht auf die exemplarischen Ausführungsformen der erfindungsgemäßen Befestigungsanordnung bzw. des erfindungsgemäßen Systems beschränkt, sondern ergibt sich aus einer Zusammenschau sämtlicher hierin offenbarter Merkmale.

### Bezugszeichenliste

- 1: Befestigungsanordnung
- 2: Klemmeinrichtung
- 3: Manipulator
- 4: Spreizelement
- 5: Anlageelement
- 6: Gleitstruktur
- 7: Rastelement
- 8: Sperrelement
- 9: Durchgangsöffnung
- 10: Anlagewandung
- 11: elastisches Element
- 12: erster Abschnitt des Spreizelements
- 13: zweiter Abschnitt des Spreizelements
- 14: Durchgangsöffnung
- 15: Ausnehmung am Rastelement
- 16: Kante am Rastelement
- 17: Ausnehmung am Rastelement
- 18: Einführrippe
- 19: Federelement
- 20: Ausnehmung am Manipulator
- 21: Ausnehmung am Manipulator
- 100: Fahrzeugverkleidungsteil
- 110: Öffnung im Fahrzeugverkleidungsteil
- 120: Randbereich des Fahrzeugverkleidungsteils
- 200: Fahrzeugkomponente
- 300: (vorbefestigtes) System
- 310: Befestigungselement
- 311: Kopf des Befestigungselements
- 312: Schaft des Befestigungselements
- 313: Gleitfläche des Befestigungselements
- 314: Rasthaken des Befestigungselements
- 400: Fahrzeugstruktur
- 410: Öffnung in der Fahrzeugstruktur

## Patentansprüche

1. Befestigungsanordnung (1) zum Vorbefestigen einer Fahrzeugkomponente (200), insbesondere einer Fahrzeuginnenkomponente, an einem Fahrzeugverkleidungsteil (100), insbesondere einem Fahrzeuginnenverkleidungsteil,
wobei die Befestigungsanordnung (1) eine Klemmeinrichtung (2) mit einem Spreizelement (4) und einem Anlageelement (5) aufweist,
wobei das Spreizelement (4) ausgebildet ist, einen ersten Zustand einzunehmen, in welchem das Spreizelement (4) in eine Öffnung (110) des Fahrzeugverkleidungsteils (100) einführbar ist, und einen zweiten Zustand einzunehmen, in welchem ein Randbereich (120) des Fahrzeugverkleidungsteils (100), der die Öffnung (110) des Fahrzeugverkleidungsteils (100) umgibt, zwischen dem Spreizelement (4) und dem Anlageelement (5) aufgenommen, insbesondere verklemmt, ist, und
wobei die Befestigungsanordnung (1) einen Manipulator (3) aufweist, der ausgebildet ist, mit dem Spreizelement (4) derart zusammenzuwirken, dass das Spreizelement (4) nachdem es in die Öffnung (110) des Fahrzeugverkleidungsteils (100) eingeführt ist von dem ersten Zustand in den zweiten Zustand überführt ist,
wobei der Manipulator (3) relativ zu dem Spreizelement (4) und dem Anlageelement (5) bewegbar ist,
wobei bei einem Bewegen des Manipulators (3) in eine erste Richtung relativ zu dem Spreizelement (4) und zu dem Anlageelement (5) der Manipulator (3) das Spreizelement (4) von dem ersten Zustand in den zweiten Zustand überführt,
wobei das Spreizelement (4) mindestens eine Spreizlasche aufweist, wobei die mindestens eine Spreizlasche einen ersten Bereich und einen sich an den ersten Bereich anschließenden zweiten Bereich (13) aufweist, wobei der zweite Bereich (13) in dem zweiten Zustand des Spreizelements (4) zumindest bereichsweise an dem Randbereich (120) des Fahrzeugverkleidungsteils (100) anliegt, und
wobei die mindestens eine Spreizlasche - in dem ersten Zustand des Spreizelements (4) - im Querschnitt S-förmig ausgebildet ist.

2. Befestigungsanordnung (1) nach Anspruch 1,
wobei der Manipulator (3) mindestens eine Gleitstruktur (6), insbesondere mindestens eine Gleitwandung, aufweist, die mit dem Spreizelement (4) beim Bewegen des Manipulators (3) in die erste Richtung relativ zu dem Spreizelement (4) und zu dem Anlageelement (5) derart zusammenwirkt, dass das Spreizelement (4) von dem ersten Zustand in den zweiten Zustand überführt wird.

3. Befestigungsanordnung (1) nach Anspruch 1 oder 2,
wobei das Spreizelement (4) federnd spreizbar ausgebildet ist, und
wobei in dem vorbefestigten Zustand der Befestigungsanordnung (1) an dem Fahrzeugverkleidungsteil (100) bei einem Bewegen des Manipulators (3) unter Kraftaufwand in eine zweite Richtung, die entgegengesetzt zu der ersten Richtung ist, das Spreizelement (4) von dem zweiten Zustand zurück in den ersten Zustand überführt wird.

4. Befestigungsanordnung (1) nach einem der Ansprüche 1 bis 3, wobei die Befestigungsanordnung (1) in einen Vormontagezustand bringbar ist, und
wobei der Manipulator (3) in dem Vormontagezustand der Befestigungsanordnung (1) ausgebildet ist, an der Klemmeinrichtung (2) befestigt zu werden, insbesondere mit dieser zu verrasten, und zwar derart, dass der Manipulator (3) vor einem ungewollten Lösen in eine zweite Richtung, die entgegengesetzt zu der ersten Richtung ist, gesichert ist.

5. Befestigungsanordnung (1) nach Anspruch 4,
wobei der Manipulator (3) ein Rastelement (7) aufweist,
wobei die Klemmeinrichtung (2) ein Sperrelement (8) aufweist, und
wobei das Rastelement (7) ausgebildet ist, mit dem Sperrelement (8) derart zusammenzuwirken, dass der Manipulator (3) in dem Vormontagezustand der Befestigungsanordnung (1) vor dem ungewollten Lösen in die zweite Richtung gesichert ist.

6. Befestigungsanordnung (1) nach Anspruch 5,
wobei das Rastelement (7) mindestens eine Rastnase aufweist, wobei das Sperrelement (8) mindestens eine Anlagewandung (10) aufweist, und
wobei in dem Vormontagezustand der Befestigungsanordnung (1) die mindestens eine Anlagewandung (10) zumindest bereichsweise an einer Kante (16) der mindestens einen Rastnase anliegt und zwar derart, dass der Manipulator (3) vor dem ungewollten Lösen in die zweite Richtung gesichert ist.

7. Befestigungsanordnung (1) nach einem der Ansprüche 1 bis 6,
wobei der Manipulator (3) als Lagerbock für die Fahrzeugkomponente (200) ausgebildet ist, und
wobei die Fahrzeugkomponente (200) eine Fahrzeugsonnenblende, ein Fahrzeughaltegriff, ein Fahrzeuglichtmodul oder eine Fahrzeugkonsole ist, oder
wobei der Manipulator (3) als Fahrzeughaltegriff, Fahrzeuglichtmodul oder Fahrzeugkonsole ausgebildet ist.

8. Befestigungsanordnung (1) nach Anspruch 7,
wobei der Manipulator (3) als Gegenlagerböckchen für eine Fahrzeugsonnenblende ausgebildet ist, und
wobei die Fahrzeugkomponente (200) eine Fahrzeugsonnenblende ist.

9. Befestigungsanordnung (1) nach einem der Ansprüche 1 bis 8, wobei die Klemmeinrichtung (2) und der Manipulator (3) aus Kunststoff, Metall oder einer Kombination hiervon ausgebildet sind.

10. System (300) aus einem Fahrzeugverkleidungsteil (100), insbesondere einem Fahrzeuginnenverkleidungsteil, und einer mittels der Befestigungsanordnung (1) nach einem der Ansprüche 1 bis 9 vorbefestigten Fahrzeugkomponente (200), insbesondere einer Fahrzeuginnenkomponente, zum Befestigen an einer Fahrzeugstruktur (400), insbesondere an einem Fahrzeugkarosserieteil,
wobei die Befestigungsanordnung (1), insbesondere der Manipulator (3) der Befestigungsanordnung (1), ausgebildet ist, mittels einer Schraube, eines Clips, eines Niets oder dergleichen mit der Fahrzeugstruktur befestigt zu werden, oder
wobei der Manipulator (3) ein Rastelement (7) aufweist,
wobei das Rastelement (7) ausgebildet ist, einen ersten Zustand einzunehmen, in welchem das Rastelement (7) in eine Öffnung (410) der Fahrzeugstruktur (400) einführbar ist, und einen zweiten Zustand einzunehmen, in welchem ein Randbereich der Fahrzeugstruktur (400), der die Öffnung (410) der Fahrzeugstruktur (400) umgibt, zwischen dem Rastelement (7) und dem Fahrzeugverkleidungsteil (400) aufgenommen, insbesondere verklemmt, ist, und
wobei das System (300) ein Befestigungselement (310) aufweist, das ausgebildet ist, mit dem Rastelement (7) zusammenzuwirken und zwar derart, dass das Rastelement (7) nachdem es in die Öffnung (410) der Fahrzeugstruktur (400) eingeführt ist von dem ersten Zustand in den zweiten Zustand überführt ist.

11. System (300) nach Anspruch 10,
wobei das Befestigungselement (310) relativ zu dem Rastelement (7) bewegbar ist,
wobei bei einem Bewegen des Befestigungselements (310) relativ zu dem Rastelement (7) in eine erste Richtung das Rastelement (7) von dem ersten Zustand in den zweiten Zustand überführt wird.

12. System (300) nach Anspruch 11,
wobei das Befestigungselement (310) einen Kopf (311) und einen sich von dem Kopf (311) aus wegerstreckenden Schaft (312) aufweist, und
wobei der Schaft (312) des Befestigungselements (310) mit dem Rastelement (7) des Manipulators (3) beim Bewegen des Befestigungselements (310) in die erste Richtung relativ zu dem Rastelement (7) derart zusammenwirkt, dass das Rastelement (7) von dem ersten Zustand in den zweiten Zustand überführt wird.

13. System (300) nach Anspruch 11 oder 12,
wobei das Rastelement (7) federnd spreizbar ausgebildet ist, und
wobei in einem befestigten Zustand des Systems (300) an der Fahrzeugstruktur (400) bei einem Bewegen des Befestigungselements (310) unter Kraftaufwand in eine zweite Richtung, die entgegengesetzt zu der ersten Richtung ist, das Rastelement (7) von dem zweiten Zustand zurück in den ersten Zustand überführt wird.

## Claims

1. A fastening arrangement (1) for pre-attaching a vehicle component (200), in particular an interior vehicle component, to a vehicle panel (100), in particular an interior vehicle panel,
wherein the fastening arrangement (1) comprises a clamping device (2) having a spreader element (4) and a contact element (5),
wherein the spreader element (4) is designed to assume a first state in which the spreader element (4) is insertable into an opening (110) of the vehicle panel (100) and a second state in which an edge region (120) of the vehicle panel (100) surrounding the opening (110) of the vehicle panel (100) is accommodated, in particular clamped, between the spreader element (4) and the contact element (5), and
wherein the fastening arrangement (1) comprises a manipulator (3) designed to interact with the spreader element (4) such that the spreader element (4) is switched from the first state to the second state after having been inserted into the opening (110) of the vehicle panel (100),
wherein the manipulator (3) is movable relative to the spreader element (4) and the contact element (5),
wherein the manipulator (3) switches the spreader element (4) from the first state to the second state when the manipulator (3) is moved in a first direction relative to the spreader element (4) and to the contact element (5),
wherein the spreader element (4) has at least one spreader tab,
wherein the at least one spreader tab comprises a first region and a second region (13) adjoining the first region,
wherein the second region (13) at least partially abuts the edge region (120) of the vehicle panel (100) in the second state of the spreader element (4), and
wherein - in the first state of the spreader element (4) - the at least one spreader tab is S-shaped in cross section.

2. The fastening arrangement (1) according to claim 1,
wherein the manipulator (3) has at least one sliding structure (6), in particular at least one sliding wall, which interacts with the spreader element (4) upon the manipulator (3) moving in the first direction relative to the spreader element (4) and to the contact element (5) such that the spreader element (4) is switched from the first state to the second state.

3. The fastening arrangement (1) according to claim 1 or 2,
wherein the spreader element (4) is designed to be resiliently expandable, and
wherein in the pre-attached state of the fastening arrangement (1) to the vehicle panel (100), the spreader element (4) is switched from the second state back into the first state when the manipulator (3) is moved by force in a second direction opposite from the first direction.

4. The fastening arrangement (1) according to one of claims 1 to 3,
wherein the fastening arrangement (1) can be brought into a pre-assembly state, and
wherein in the pre-assembly state of the fastening arrangement (1), the manipulator (3) is designed to be attached to the clamping device (2), in particular latch into same, and to do so such that the manipulator (3) is secured against inadvertent dislodging in a second direction opposite from the first direction.

5. The fastening arrangement (1) according to claim 4,
wherein the manipulator (3) comprises a latching element (7),
wherein the clamping device (2) comprises a locking element (8), and
wherein the latching element (7) is designed to interact with the locking element (8) such that the manipulator (3) is secured against inadvertent dislodging in the second direction in the pre-assembly state of the fastening arrangement.

6. The fastening arrangement (1) according to claim 5,
wherein the latching element (7) comprises at least one latching tab,
wherein the locking element (8) has at least one bearing wall (10), and
wherein in the pre-assembly state of the fastening arrangement (1), the at least one bearing wall (10) at least partially abuts an edge (16) of the at least one latching tab and in such a way that the manipulator (3) is secured against inadvertent dislodging in the second direction.

7. The fastening arrangement (1) according to one of claims 1 to 6,
wherein the manipulator (3) is designed as a bearing bracket for the vehicle component (200), and
wherein the vehicle component (200) is a vehicle visor, a vehicle handle, a vehicle lighting module or a vehicle console, or
wherein the manipulator (3) is designed as a vehicle handle, vehicle lighting module or vehicle console.

8. The fastening arrangement (1) according to claim 7,
wherein the manipulator (3) is designed as a counter bearing bracket for a vehicle visor, and
wherein the vehicle component (200) is a vehicle visor.

9. The fastening arrangement (1) according to one of claims 1 to 8,
wherein the clamping device (2) and the manipulator (3) are made from plastic, metal or a combination thereof.

10. A system (300) comprising a vehicle panel (100), in particular an interior vehicle panel, and a vehicle component (200), in particular an interior vehicle component, which is pre-attached by means of the fastening arrangement (1) according to one of claims 1 to 9 for fixing to a vehicle structure (400), in particular to a part of the car body,
wherein the fastening arrangement (1), in particular the manipulator (3) of the fastening arrangement (1), is designed to be fixed to the vehicle structure by means of a screw, a clip, a rivet or the like, or,
wherein the manipulator (3) comprises a latching element (7),
wherein the latching element (7) is designed to assume a first state in which the latching element (7) is insertable into an opening (410) of the vehicle structure (400) and a second state in which an edge region of the vehicle structure (400) surrounding the opening (110) of the vehicle structure (400) is accommodated, in particular clamped, between the latching element (7) and the vehicle panel (400), and
wherein the system (300) comprises a fastening element (310) designed to interact with the latching element (7) and in such a way that the latching element (7) is switched from the first state to the second state after having been inserted into the opening (410) of the vehicle structure (400).

11. The system (300) according to claim 10,
wherein the fastening arrangement (310) is movable relative to the latching element (7),
wherein the latching element (7) is switched from the first state to the second state when the fastening arrangement (310) is moved in a first direction relative to the latching element (7).

12. The system (300) according to claim 11,
wherein the fastening arrangement (310) has a head (311) and a shank (312) extending out from the head (311), and
wherein the shank (312) of the fastening element (310) interacts with the latching element (7) of the manipulator (3) upon the fastening element (310) moving relative to the latching element (7) in the first direction such that the latching element (7) is switched from the first state to the second state.

13. The system (300) according to claim 11 or 12,
wherein the latching element (7) is designed to be resiliently expandable, and
wherein in an attached state of the system (300) to the vehicle structure (400), the latching element (7) is switched from the second state back into the first state when the fastening element (310) is moved by force in a second direction opposite from the first direction.

## Revendications

1. Agencement de fixation (1) destiné à pré-fixer un composant de véhicule (200), en particulier un composant d'intérieur de véhicule, au niveau d'une partie d'habillage de véhicule (100), en particulier une partie d'habillage d'intérieur de véhicule,
dans lequel l'agencement de fixation (1) présente un moyen de serrage (2) avec un élément d'écartement (4) et un élément d'appui (5),
dans lequel l'élément d'écartement (4) est réalisé pour entrer dans un premier état dans lequel l'élément d'écartement (4) peut être introduit dans une ouverture (110) de la partie d'habillage de véhicule (100), et pour entrer dans un second état dans lequel une zone périphérique (120) de la partie d'habillage de véhicule (100), qui entoure l'ouverture (110) de la partie d'habillage de véhicule (100), est reçue, en particulier serrée, entre l'élément d'écartement (4) et élément d'appui (5), et
dans lequel l'agencement de fixation (1) présente un manipulateur (3) qui est réalisé pour coopérer avec l'élément d'écartement (4) de telle sorte que l'élément d'écartement (4), une fois introduit dans l'ouverture (110) de la partie d'habillage de véhicule (100), passe depuis le premier état jusque dans le second état,
dans lequel le manipulateur (3) peut être déplacé relativement à l'élément d'écartement (4) et à l'élément d'appui (5),
dans lequel, lors d'un déplacement du manipulateur (3) dans une première direction relativement à l'élément d'écartement (4) et à l'élément d'appui (5), le manipulateur (3) fait passer l'élément d'écartement (4) depuis le premier état jusque dans le second état,
dans lequel l'élément d'écartement (4) présente au moins une languette d'écartement,
dans lequel ladite au moins une languette d'écartement présente une première zone et une seconde zone (13) adjacente à la première zone, dans lequel la seconde zone (13), dans le second état de l'élément d'écartement (4), est en appui au moins en partie au niveau de la zone périphérique (120) de la partie d'habillage de véhicule (100), et
dans lequel ladite au moins une languette d'écartement, dans le premier état de l'élément d'écartement (4), est réalisée en forme de S dans la section transversale.

2. Agencement de fixation (1) selon la revendication 1,
dans lequel le manipulateur (3) présente au moins une structure coulissante (6), en particulier au moins une paroi coulissante, qui coopère avec l'élément d'écartement (4) lors d'un déplacement du manipulateur (3) dans la première direction relativement à l'élément d'écartement (4) et à l'élément d'appui (5) de telle sorte que l'élément d'écartement (4) passe depuis le premier état jusque dans le second état.

3. Agencement de fixation (1) selon la revendication 1 ou 2,
dans lequel l'élément d'écartement (4) est réalisé de manière à pouvoir être écarté de façon élastique, et
dans lequel, dans l'état pré-fixé de l'agencement de fixation (1) au niveau de la partie d'habillage de véhicule (100) lors d'un déplacement du manipulateur (3) en exerçant une force dans une seconde direction qui est opposée à la première direction, l'élément d'écartement (4) repasse depuis le second état jusque dans le premier état.

4. Agencement de fixation (1) selon l'une quelconque des revendications 1 à 3,
dans lequel l'agencement de fixation (1) peut être amené dans un état de pré-montage, et
dans lequel le manipulateur (3), dans l'état de pré-montage de l'agencement de fixation (1), est réalisé pour être fixé au niveau du moyen de serrage (2), en particulier pour s'encliqueter avec celui-ci, et de telle sorte que le manipulateur (3) est sécurisé contre un détachement involontaire dans une seconde direction qui est opposée à la première direction.

5. Agencement de fixation (1) selon la revendication 4,
dans lequel le manipulateur (3) présente un élément d'encliquetage (7), dans lequel le moyen de serrage (2) présente un élément de blocage (8), et
dans lequel l'élément d'encliquetage (7) est réalisé pour coopérer avec l'élément de blocage (8) de telle sorte que le manipulateur (3), dans l'état de pré-montage de l'agencement de fixation (1), est sécurisé contre le détachement involontaire dans la seconde direction.

6. Agencement de fixation (1) selon la revendication 5,
dans lequel l'élément d'encliquetage (7) présente au moins un ergot d'encliquetage,
dans lequel l'élément de blocage (8) présente au moins une paroi d'appui (10), et
dans lequel, dans l'état de pré-montage de l'agencement de fixation (1), ladite au moins une paroi d'appui (10) est en appui au moins en partie au niveau d'un bord (16) dudit au moins un ergot d'encliquetage, et de telle sorte que le manipulateur (3) est sécurisé contre le détachement involontaire dans la seconde direction.

7. Agencement de fixation (1) selon l'une quelconque des revendications 1 à 6,
dans lequel le manipulateur (3) est réalisé sous forme de sabot d'appui pour le composant de véhicule (200), et
dans lequel le composant de véhicule (200) est un pare-soleil de véhicule, une poignée de maintien de véhicule, un module d'éclairage de véhicule ou une console de véhicule, ou
dans lequel le manipulateur (3) est réalisé sous forme de poignée de maintien de véhicule, de module d'éclairage de véhicule ou de console de véhicule.

8. Agencement de fixation (1) selon la revendication 7,
dans lequel le manipulateur (3) est réalisé sous forme de petit sabot d'appui antagoniste pour un pare-soleil de véhicule, et
dans lequel le composant de véhicule (200) est un pare-soleil de véhicule.

9. Agencement de fixation (1) selon l'une quelconque des revendications 1 à 8,
dans lequel le moyen de serrage (2) et le manipulateur (3) sont réalisés à partir de matières plastiques, de métal ou d'une combinaison de ceux-ci.

10. Système (300) constitué d'une partie d'habillage de véhicule (100), en particulier d'une partie d'habillage d'intérieur de véhicule, et d'un composant de véhicule (200), en particulier un composant d'intérieur de véhicule, pré-fixé au moyen de l'agencement de fixation (1) selon l'une quelconque des revendications 1 à 9, destiné à une fixation au niveau d'une structure de véhicule (400), en particulier une partie de carrosserie de véhicule,
dans lequel l'agencement de fixation (1), en particulier le manipulateur (3) de l'agencement de fixation (1), est réalisé pour être fixé, au moyen d'une vis, d'une agrafe, d'un rivet ou similaire, à la structure de véhicule, ou
dans lequel le manipulateur (3) présente un élément d'encliquetage (7),
dans lequel l'élément d'encliquetage (7) est réalisé pour entrer dans un premier état dans lequel l'élément d'encliquetage (7) peut être introduit
dans une ouverture (410) de la structure de véhicule (400), et pour entrer dans un second état dans lequel une zone périphérique de la structure de véhicule (400) qui entoure l'ouverture (410) de la structure de véhicule (400) est reçue, en particulier serrée, entre l'élément d'encliquetage (7) et la partie d'habillage de véhicule (400), et
dans lequel le système (300) présente un élément de fixation (310) qui est réalisé pour coopérer avec l'élément d'encliquetage (7), et de telle sorte que l'élément d'encliquetage (7), une fois introduit dans l'ouverture (410) de la structure de véhicule (400), passe depuis le premier état jusque dans le second état.

11. Système (300) selon la revendication 10,
dans lequel l'élément de fixation (310) peut être déplacé relativement à l'élément d'encliquetage (7),
dans lequel, lors d'un déplacement de l'élément de fixation (310) relativement à l'élément d'encliquetage (7) dans une première direction, l'élément d'encliquetage (7) passe depuis le premier état jusque dans le second état.

12. Système (300) selon la revendication 11,
dans lequel l'élément de fixation (310) présente une tête (311) et une tige (312) s'étendant en éloignement de la tête (311), et
dans lequel la tige (312) de l'élément de fixation (310) coopère avec l'élément d'encliquetage (7) du manipulateur (3), lors du déplacement de l'élément de fixation (310) dans la première direction relativement à l'élément d'encliquetage (7), de telle sorte que l'élément d'encliquetage (7) passe depuis le premier état jusque dans le second état.

13. Système (300) selon la revendication 11 ou 12,
dans lequel l'élément d'encliquetage (7) est réalisé de manière à pouvoir être écarté de façon élastique, et
dans lequel, dans un état fixé du système (300) au niveau de la structure de véhicule (400) lors d'un déplacement de l'élément de fixation (310) en exerçant une force dans une seconde direction qui est opposée à la première direction, l'élément d'encliquetage (7) repasse depuis le second état jusque dans le premier état.
